# EUROPÄISCHE PATENTSCHRIFT

(11) **EP 0 699 501 B1**
(45) Veröffentlichungstag und Bekanntmachung des Hinweises auf die Patenterteilung: **09.06.1999**
(21) Anmeldenummer: 94113503.0
(22) Anmeldetag: 30.08.1994
(51) Int. Cl.: B23Q 3/00, B23B 31/117, B23B 31/02, B23C 5/26

(54) **Spannvorrichtung zum Einspannen eines Werkzeuges**
Clamping device to clamp tools
Dispositif de serrage à serrer les outils

(43) Veröffentlichungstag der Anmeldung: 06.03.1996
(73) Patentinhaber: Baur, Manfred, D-89129 Langenau (DE)
(72) Erfinder: Baur, Manfred, D-89129 Langenau (DE)
(74) Vertreter: Weitzel, Wolfgang, Dr.-Ing. Patentanwalt

(56) Entgegenhaltungen:
- EP-A- 0 093 884
- EP-A- 0 433 925
- AU-B- 407 776
- CH-A- 502 158
- FR-A- 2 264 628
- GB-A- 2 084 913

## Beschreibung

Die Erfindung betrifft eine Spannvorrichtung zum Einspannen eines Werkzeuges. Auf den Oberbegriff des Anspruchs 1 wird verwiesen.

Spannvorrichtungen dieser Art sind in zahlreichen Ausführungsformen bekannt. Sie dienen dazu, ein Werkzeug an beziehungsweise in eine Werkzeugmaschine einzuspannen. Dabei kommen Werkzeuge jeglicher Art in Betracht, beispielsweise Schneidwerkzeuge, Bohrer usw.

Zum Andrücken des Werkzeuges gegen einen Grundkörper wird meist ein Spannkopf verwendet. Dieser arbeitet hydraulisch. Er weist eine Druckschraube auf, die ein Druckmedium beaufschlagt, das seinerseits wiederum einen Ringkolben beaufschlagt und auf das Werkzeug einwirkt, um dieses gegen den Grundkörper anzudrücken und damit einzuspannen.

Es gibt zahlreiche Anforderungen, die üblicherweise an Spannvorrichtungen der genannten Art gestellt werden. So soll die Vorrichtung vor allem zuverlässig arbeiten. Sie soll sich nämlich nicht lösen, auch nicht bei intensiver Arbeit der Werkzeugmaschine, beispielsweise bei Schwingungen oder Rüttelbewegungen. Ferner soll die Spannvorrichtung möglichst wenig Einzelteile aufweisen, leicht zu montieren sein, und demgemäß kostengünstig herzustellen sein. Weiterhin soll eine Spannvorrichtung wenig Raum beanspruchen.

EP-A-0 433 925 beschreibt eine Spannvorrichtung gemäß dem Oberbegriff des unabhängigen Anspruchs 1 mit einem Grundkörper, der zur Verbindung mit einer Werkzeugmaschine bestimmt ist, und der mit einem Spannkopf zum Andrücken des Werkzeuges gegen den Grundkörper versehen ist.

Die Gesamtheit dieser Anforderungen wird hier nicht erfüllt, oder die einzelnen Anforderungen werden nur unvollkommen erfüllt.

Der Erfindung liegt die Aufgabe zugrunde, eine Spannvorichtung gemäß dem Oberbegriff von Anspruch 1 derart zu gestalten, daß sie zuverlässiger im Betrieb wird, daß sie weniger Teil- und Montagevorgänge aufweist, so daß sie kostengünstiger herzustellen ist und daß sie weniger Raum beansprucht.

Diese Aufgabe wird durch die kennzeichnenden Merkmale von Anspruch 1 gelöst.

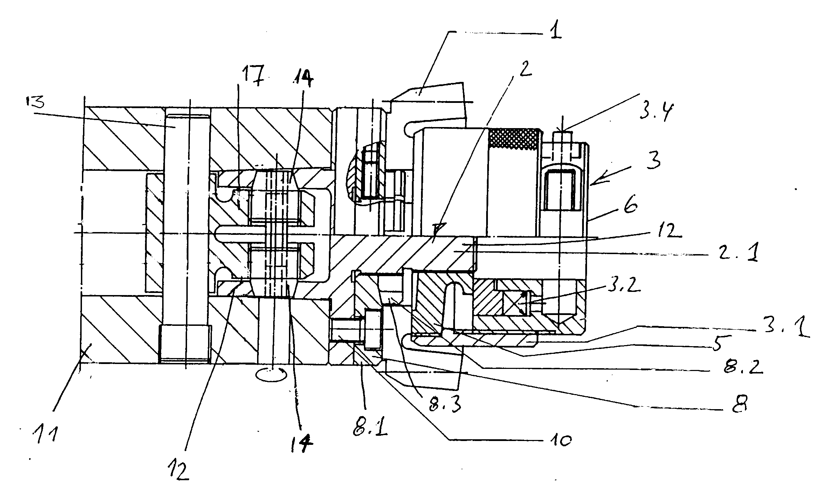

Figur 1 zeigt eine Zusammenstellungszeichnung einer Spannvorrichtung gemäß der Erfindung, teilweise im Axialschnitt. Man erkennt im einzelnen einen Grundkörper 2, der zur Verbindung mit einer hier nicht dargestellten Werkzeugmaschine bestimmt ist. Ein Spannkopf 3 dient zum Andrücken des Werkzeuges 1 gegen den Grundkörper 2. Der Spannkopf 3 weist einen Spannflansch 5 auf, der nach Art einer Tellerfeder verformbar und damit vorspannbar ist. Es ist weiterhin ein Spannelement 6 vorgesehen, das dem Aufbringen einer Vorspannung auf den Spannflansch 5 dient. Das Spannelement 6 ist ein an sich bekanntes hydraulisches Element. Es umfaßt eine hier nicht erkennbare Druckschraube zum Beaufschlagen eines Druckmediums, sowie einen Ringkolben 3.2, der seinerseits einen radial inneren Bereich des Spannflansches 5 im Sinne des Vorspannens beaufschlagt. Das Spannelement ist in eine Adapterhülse 3.1 eingeschraubt.

Zwischen Grundkörper 2 und Werkzeug 1 ist ein Aufnahmekörper 8 vorgesehen der austauschbar sein könnte. Der Aufnahmekörper 8 umfaßt einen Aufnehmerflansch 8.1 sowie eine an den Aufnehmerflansch 8.1 angesetzte Aufnehmerhülse 8.2. Flansch 8.1 und Hülse 8.2 sind einteilig miteinander und im vorliegenden Falle durch Drehen hergestellt.

Die Aufnehmerhülse ist außerdem mit Radialschlitzen 8.3 versehen. Der Außendurchmesser der Aufnehmerhülse 8.2 ist geringfügig größer als die lichte Weite der Bohrung des Werkzeuges 1.

Der Aufnahmekörper 8 ist "schwimmend gelagert". Er weist eine Anzahl von radial angeordneten Zentrierschrauben auf.

Der Aufnehmerflansch 8.1 ist ferner mit Bohrungen zur Aufnahme von Halteschrauben 10 z.B. Klemmschrauben - 4x am Umfang versehen, die in einen mit der Werkzeugmaschine zu verbindenden Schaft 11 einschraubbar sind. Dabei haben die Bohrungen im Aufnehmerflansch 8.1 eine größere lichte Weite als der Außendurchmesser des Aufnehmerflansches, so daß ein radiales Justieren erfolgen kann.

Der Grundkörper 2 weist einen Zapfen 12 auf. Ein in die Werkzeugmaschine einzusetzender Schaft 11 ist als Hohlschaft ausgebildet. Der Zapfen des Grundkörpers 2 ist in den Hohlschaft 11 eingesetzt.

Im Hohlschaft 11 ist ein Paar Zuglaschen 17 eingesetzt. Das eine Ende einer jeden Zuglasche 17 ist von einem Haltebolzen 13 gehalten. Dieser ist senkrecht zur Längsachse des Hohlschaftes 11 in diesen eingesetzt. Das andere, dem Grundkörper 2 zugewandte Ende einer jeden Zuglasche 17 umschließt je eine Klemmschraube 14. Dabei ist die einzelne Klemmschraube 14 mit einem Außengewinde versehen und die Bohrung der betreffenden Zuglasche mit einem Innengewinde. Die beiden Gewinde sind gegenläufig. Ferner sind die beiden Klemmschrauben 14 durch eine gemeinsame Achse drehfest miteinander verbunden, aber derart, daß sie in Richtung dieser Achse zu gleiten vermögen. Im vorliegenden Falle besteht die Achse aus einem Sechskantstab. Die Klemmschrauben können manuell oder automatisch betätigt werden.

Die gesamte Vorrichtung arbeitet wie folgt: Ein ganz entscheidender Gedanke ist die Ausbildung eines Spannflansches in der Art einer Tellerfeder. Dieser Spannflansch läßt sich verformen und somit vorspannen. Ganz entscheidend ist, daß dieser Verformungs- und Vorspannvorgang außerhalb der Maschine vorgenommen werden kann. Dies bedeutet geringen Platzbedarf. Dabei spielt es keine Rolle, auf welche Weise das Vorspannen des Spannflansches 5 vorgenommen wird. Im vorliegenden Falle wird es, wie ausgeführt, hydraulisch vorgenommen. Der Spannflansch 5 wird zu diesem Zweck von einem zum Grundkörper 2 gehörenden Zapfen 2.1 mit Außengewinde abgeschraubt. Spannflansch 5 und Spannkopf 3 sind durch eine Adapterhülse 3.1, die austauschbar sein könnte, miteinander verbunden. Wird auf den Spannkopf über das Druckmedium Druck aufgebracht, so wird dieser - wie erwähnt - auf den Ringkolben 3.2 des Spannkopfes 3 über einen Zwischenring und damit auf einen radial inneren Bereich des Spannflansches 5 übertragen. Der dabei aufgebrachte Druck läßt sich genau dosieren, und zwar mittels einer Spannkraftanzeige 3.4, die Bestandteil des Spannkopfes 3 ist.

Nachdem der Spannflansch 5 derart vorgespannt oder "präpariert" ist, wird er wieder auf den Zapfen 2.1 des Grundkörpers 2 aufgeschraubt, bis er mit einer radialen inneren Stirnfläche an einer entsprechenden Stirnfläche des Werkzeuges 1 anliegt. Sodann wird der bisher noch vom Spannkopf 3 aufgebrachte Druck weggenommen. Der Spannflansch 5 vermag sich nunmehr wieder zu entspannen, nimmt seine ursprüngliche Form an, drückt damit gegen die genannte Stirnfläche des Werkzeuges und verspannt dieses mit dem Aufnahmekörper 8, genauer gesagt mit dessen Aufnehmerflansch 8.1.

Die Vorteile dieser Ausführungsfom bestehen in folgendem: Der Spannflansch kann außerhalb der Maschine vorgespannt werden. Hieraus ergeben sich ganz erhebliche Platzersparnisse in der Maschine. Die Genauigkeit wird wesentlich gesteigert. Es gibt keine Unwuchtprobleme sowie keine Leckageprobleme.

Die Ausgestaltung des Aufnahmekörpers 8 bietet weiterhin ganz entscheidende Vorteile. Damit wird man nämlich unabhägig vom Durchmesser des aufzunehmenden Werkzeuges. Besonders vorteilhaft sind dabei die Radialschlitze 8.3 in der Aufnehmerhülse 8.2. Hierdurch wird eine gewisse Vorspannung beim Aufsetzen des Werkzeuges 1 auf die Aufnehmerhülse 8.2 erzielt. Außerdem gibt es keine Probleme beim Werkzeugwechsel. Die Radialschlitze führen zu einer Nachgiebigkeit der hierdurch geschaffenen Segmente der Aufnehmerhülse 8.2, so daß sich das Werkzeug relativ leicht abziehen läßt. Beim Stande der Technik war es vielfach notwendig, mit Gewalt, beispielsweise durch Hammerschläge, das Werkzeug zu entfernen, was natürlich äußerst ungut ist.

Die Gestaltung der Verbindung zwischen Grundkörper 2 und Schaft 11 ist aus den folgenden Gründen sehr vorteilhaft.

Der Schaft 11 ist - wie ausgeführt - ein Hohlschaft, der den Zapfen 12 des Grundkörpers 2 aufzunehmen vermag. Zum Zweck des Verspannens wird die gemeinsame Achse - im vorliegenden Falle der genannte Sechskantstab - um seine eigene Achse verdreht. Da die Klemmschrauben 14 gegenläufige Gewinde aufweisen, wandern sie bei dieser Verdrehung nach außen und entfernen sich voreinander. Wie man sieht, sind sie an ihren äußeren Enden konisch ausgebildet. Diese konischen Enden drücken gegen die beiden Stirnwände der Zapfens 12 des Grundkörpers 2 im Sinne eines Spreizens dieser Stirnwände. Die Stirnwände legen sich somit gegen die innere Fläche des Hohlschaftes 11 an und führen zu einem Verspannen. Gleichzeitig tritt aber folgender Effekt auf. Die beiden Zuglaschen 17 bewegen sich aufeinander zu (die Bewegung liegt in der Größenordnung von wenigen Zentel Millimetern). Dies führt zu einer weiteren Vorspannung, so daß sich die Klemmschrauben 14 bei Vibration der Maschine nicht lösen.

Wie man sieht, haben die Stirnwände des Zapfens 12 des Grundkörpers 2 Bohrungen zur Aufnahme der konischen Enden der Klemmschrauben 14. Die Achsen dieser Bohrungen sind geringfügig einwärts (gegen die Maschine hin) versetzt, bezogen auf die gemeinsame Achse der Gewindebohrungen der Zuglaschen 17. Dies führt dazu, daß bei einem Anziehen des Sechskantstabes und damit bei einem gegenseitigen Entfernen der Klemmschrauben 14 eine Axialspannkraft aufgebracht wird, was zu einem weiteren Verfestigen der gesamten Baueinheit führt.

### Verzeichnis der Einzelteile mit Bezugszeichen

- Werkzeug: 1
- Grundkörper: 2
- Zapfen des Grundkörpers: 2.1
- Spannkopf: 3
- Adapterhülse: 3.1
- Ringkolben: 3.2
- Spannkraftanzeige: 3.4
- Spannflansch: 5
- Spannelement: 6
- Aufnehmerkörper: 8
- Aufnehmerflansch: 8.1
- Aufnehmerhülse: 8.2
- Radialschlitze: 8.3
- Halteschrauben: 10
- Hohlschaft: 11
- Zapfen des Grundkörpers 2: 12
- Haltebolzen: 13
- Klemmschrauben: 14
- Zuglaschen: 17

## Patentansprüche

1. Spannvorrichtung zum Einspannen eines Werkzeuges (1)
mit einem Grundkörper (2), der zur Verbindung mit der Werkzeugmaschine bestimmt ist, und einem
mit einem Spannflansch (5) aufweisenden Spannkopf (3) zum Andrücken des Werkzeuges (1) gegen den Grundkörper (2); dadurch gekennzeichnet, daß der
Spannflansch (5) nach Art einer Tellerfeder verformbar und damit vorspannbar ist und
ein Spannelement (6) zum Aufbringen einer Vorspannung auf den Spannflansch (5) vorgesehen ist.

2. Spannvorrichtung nach Anspruch 1, dadurch gekennzeichnet, daß das Spannelement (6) ein hydraulisches Element ist, das eine Druckschraube zum Beaufschlagen eines Druckmediums aufweist sowie einen Ringkolben (3.2), der seinerseits einen radial inneren Bereich des Spannflansches (5) im Sinne des Vorspannens beaufschlagt.

## Claims

1. Clamping device for holding a tool (1) with a main body (2), which is designed to connect with the machine tool, and a clamping head (3) comprising a clamping flange (5) for pressing the tool (1) against the main body (2), characterised in that the clamping flange (5) is deformable like a disc spring and can thus be preloaded, and a clamping element (6) is provided for preloading the clamping flange (5).

2. Clamping device according to claim 1, characterised in that the clamping element (6) is a hydraulic element, which comprises a pressing screw for loading a pressure medium as well as an annular piston (3.2), which in turn loads a radially inner region of the clamping flange (5) with the purpose of preloading.

## Revendications

1. Dispositif de serrage pour le blocage d'un outil (1) contre un corps de bâti (2) adapté à l'assemblage avec la machine-outil, au moyen d'une tête de serrage (3) qui comporte une bride de serrage (5) et applique en pression l'outil (1) contre le corps de bâti (2) ; **caractérisé en ce que** la bride de serrage (5) est déformable à la manière d'une rondelle conique et peut ainsi être mise en précontrainte, et en ce qu'il comprend un élément de serrage (6) pour appliquer une précontrainte sur la bride de serrage

2. Dispositif de serrage selon la revendication 1, caractérisé en ce que l'élément de serrage (6) est un élément hydraulique qui comporte une vis de serrage pour l'injection d'un fluide de pression ainsi qu'un piston annulaire (3.2) qui de son côté comprime une zone interne radiale de la bride de serrage (5) dans le sens de la précontrainte.
